# EUROPÄISCHE PATENTSCHRIFT

(11) **EP 3 533 730 B1**
(45) Veröffentlichungstag und Bekanntmachung des Hinweises auf die Patenterteilung: **09.08.2023**
(21) Anmeldenummer: 19162322.2
(22) Anmeldetag: 08.09.2015
(51) Int. Cl.: B65G 1/137, B65G 1/04

(54) **KOMMISSIONIERVORRICHTUNG ZUM EINLAGERN EINER MEHRZAHL VON IDENTISCHEN STÜCKGÜTERN**
PICKING DEVICE FOR STORING A NUMBER OF IDENTICAL ARTICLES
DISPOSITIF DE PRÉPARATION DE COMMANDES DESTINÉ À ENTREPOSER UNE PLURALITÉ DE MARCHANDISES DE DÉTAIL IDENTIQUES

(43) Veröffentlichungstag der Anmeldung: 04.09.2019
(62) Teilanmeldung aus: 15184246.5
(73) Patentinhaber: Becton Dickinson Rowa Germany GmbH, 53539 Kelberg (DE)
(72) Erfinder: HELLENBRAND, Christoph, 56761 Kaifenheim (DE)
(74) Vertreter: Zenz Patentanwälte Partnerschaft mbB

(56) Entgegenhaltungen:
- EP-A1- 1 627 830
- WO-A1-2007/012444
- DE-A1- 4 318 341
- DE-A1- 19 509 951
- DE-A1-102008 027 646

## Beschreibung

Die vorliegende Erfindung betrifft eine Kommissioniervorrichtung zum Einlagern einer Mehrzahl von identischen Stückgütern, insbesondere Arzneimittelpackungen.

Automatisierte Kommissioniervorrichtungen werden häufig in Apotheken eingesetzt, um Arzneimittelpackungen platzsparend lagern zu können. Die Arzneimittelpackungen können in den bekannten, für Apotheken geeigneten Kommissioniervorrichtungen chaotisch gelagert werden, d. h. die Arzneimittelpackungen werden in der Vorrichtung nicht an vorbestimmten Ablageplätzen gelagert, sondern an solchen Ablageplätzen, bei denen gerade ausreichend Lagerplatz vorhanden ist. Überflüssiges Leervolumen kann so vermieden werden, die Anzahl an gelagerten Arzneimittelpackungen pro m² Grundfläche erheblich erhöht werden. Die chaotische Lagerung wird regelmäßig für solche Arzneimittel bzw. Arzneimittelpackungen genutzt, deren Ausgabefrequenz eher gering ist (sogenannte Langsamdreher).

Bei Arzneimitteln bzw. Arzneimittelpackungen mit einer hohen Ausgabefrequenz wird regelmäßig die sortenreine Lagerung in Schachtsystemen genutzt, bei welcher eine Vielzahl von identischen Arzneimittelpackungen in üblicherweise geneigten Lagerschächten gelagert wird, bei deren Ende eine Auslöseeinrichtung angeordnet ist. Wird ein in einem Lagerschacht angeordnetes Arzneimittel angefordert, muss lediglich die Auslöseeinrichtung ausgelöst werden, um eine Arzneimittelpackung auszugeben. Wird ein Arzneimittel angefordert, das chaotisch gelagert ist, muss dieses mit einem Bediengerät bei seinem Lagerort ergriffen und ausgelagert werden. Die Auslagerung einer chaotisch gelagerten Arzneimittelpackung nimmt mehr Zeit in Anspruch, so dass insbesondere bei Kommissioniervorrichtungen mit erhöhter allgemeiner Auslagerungsfrequenz eine Kombination von chaotischer und sortenreiner Lagerung üblich ist.

Unabhängig davon, ob lediglich eine chaotische oder sortenreine Lagerung, oder eine Kombination beider Lagerarten verwendet wird, ist es üblich, dass mehrere Arzneimittelpackungen des gleichen Arzneimittels in die Kommissioniervorrichtung einzulagern sind. Bei bekannten Verfahren werden die Arzneimittelpackungen dazu entweder einzeln auf einer Einlagerungseinrichtung abgelegt und nacheinander in die Kommissioniervorrichtung bewegt, oder es wird eine Mehrzahl von identischen Arzneimittelpackungen auf einer Auflagefläche einer Einlagerungseinrichtung abgelegt. Einer Steuereinrichtung der Kommissioniervorrichtung wird dann manuell die Anzahl der abgelegten Arzneimittelpackungen mitgeteilt und dadurch der Start der Einlagerung initiiert. Die bekannten Verfahren sind zeitaufwendig (Einlagerung nacheinander) oder fehleranfällig (Angabe einer falschen Zahl abgelegter Arzneimittelpackungen).

Die DE 195 09 951 A1 offenbart eine Kommissioniervorrichtung für Stückgüter, aufweisend zumindest eine Regalreihe mit mindestens einem Regal mit einer Mehrzahl von übereinander angeordneten Regalböden, zumindest eine Einlagerungseinrichtung mit einem Auflagebereich zur Aufnahme von einzulagernden Stückgütern, ein mit einer Steuereinrichtung gekoppeltes Bediengerät mit einem Auflagetisch zur Aufnahme eines oder mehrerer Stückgüter, wobei der Auflagetisch einen stirnseitigen Rand aufweist, und zumindest einer Greifvorrichtung mit welcher Stückgüter in einem Entnahmebereich einer Einlagerungseinrichtung ergriffen und von der Einlagerungseinrichtung über den stirnseitigen Rand auf den Auflagetisch bewegt werden können, eine mit der Steuereinrichtung gekoppelte Auslöseeinrichtung zum Initiieren einer Einlagerung von Stückgütern, und zumindest ein mit der Steuereinrichtung gekoppeltes Sensorsystem, mit welchem Stückgutdaten erfassbar und an die Steuereinrichtung übermittelbar sind.

Die DE 102 25 332 A1 beispielsweise offenbart einen Einlagerungspuffer für eine Kommissioniervorrichtung. Dieser umfasst eine Mehrzahl von Lagerflächen, auf welche nichtsortenreine Stückgüter beliebig abgelegt werden. Mittels eines Kamerasystems wird die Grundfläche sowie die Anordnung der Stückgüter ermittelt, und bei einem Umlagerungsvorgang zum Ermitteln eines auf den Stückgütern aufgebrachten Identifizierers wird schließlich die Höhe der Stückgüter erfasst. Mit dem Einlagerungspuffer werden die Stückgüter also vermessen und identifiziert.

Es ist daher Aufgabe der vorliegenden Erfindung, eine Kommissioniervorrichtung bereitzustellen, mit welcher eine Mehrzahl identischer Stückgüter zeitsparend und mit reduzierter Fehlerhäufigkeit eingelagert werden kann.

Die oben genannte Aufgabe wird gelöst durch eine Kommissioniervorrichtung gemäß Patentanspruch 1.

Die erfindungsgemäße Kommissioniervorrichtung umfasst zumindest eine Regalreihe mit mindestens einem Regal mit einer Mehrzahl von übereinander angeordneten Regalböden. Auf diesen Regalböden können die einzulagernden Stückgüter chaotisch oder in auf den Regalböden ausgebildeten Lagerschächten gelagert sein.

Die Kommissioniervorrichtung umfasst ferner zumindest eine Einlagerungseinrichtung mit einer Auflagefläche zur Aufnahme von einzulagernden Stückgütern, wobei diese nach Anordnung auf der Auflagefläche mit Hilfe der Einlagerungseinrichtung in die Kommissioniervorrichtung bewegt werden.

Die Kommissioniervorrichtung umfasst darüber hinaus ein mit einer Steuereinrichtung gekoppeltes Bediengerät mit einem Auflagetisch zur Aufnahme eines oder mehrerer Stückgüter, wobei der Auflagetisch einen stirnseitigen, einer Einlagerungseinrichtung zugeordneten Rand aufweist.

Das Bediengerät umfasst ferner eine Greifvorrichtung, mit welcher Stückgüter in dem Entnahmebereich einer Einlagerungseinrichtung ergriffen und von der Einlagerungseinrichtung über den stirnseitigen Rand auf den Auflagetisch bewegt werden können.

Die Kommissioniervorrichtung umfasst ferner eine mit der Steuereinrichtung gekoppelte Auslöseeinrichtung zum Initiieren einer Einlagerung von Stückgütern nach dem Auflegen eines letzten Stückgutes und zumindest ein mit der Steuereinrichtung gekoppelten Sensorsystem, mit welchem Stückgutdaten erfassbar und an die Steuereinrichtung übermittelbar sind, wobei die Steuereinrichtung erfindungsgemäß derart ausgebildet ist, dass die Anzahl der in dem Auflagebereich angeordneten identischen Stückgüter auf der Basis der Stückgutdaten und auf der Basis von der Steuereinrichtung bekannten Größendaten der Stückgüter ermittelbar ist.

Aufgrund der Verwendung des oben genannten Sensorsystems, mit welchem Stückgutdaten erfassbar sind, ist die Steuereinrichtung auf der Basis des von dem Sensorsystem gelieferten Signals bzw. der Stückgutdaten, ggf. unter Verwendung weiterer Daten, in der Lage, die Anzahl der bewegten Stückgüter automatisch zu ermitteln. Details dazu wurden bereits unter Bezugnahme auf das Verfahren gemäß der Stammanmeldung EP 3 141 497 dargelegt.

Bei einer Ausführungsform der Kommissioniervorrichtung ist ein Sensorsystem als ein Auflagebereich-Sensorsystem ausgebildet, mit welchem Stückgutdaten der im Auflagebereich angeordneten Stückgüter erfassbar sind.

Bei einer Ausführungsform ist ein Sensorsystem als Einlagerungs-Sensorsystem ausgebildet, mit welchem Stückgutdaten bei dem Bewegen der Stückgüter entlang der Einlagerungsrichtung oder nach dem Bewegen der Stückgüter in den Entnahmebereich erfassbar sind.

Bei einer Ausführungsform ist ein Sensorsystem als ein einem Entnahmebereich zugeordnetes Entnahmebereich-Sensorsystem ausgebildet, mit welchem Stückgutdaten bei dem Bewegen der Stückgüter auf den Auflagetisch erfassbar sind.

Mit der Steuereinrichtung ist eine Auslöseeinrichtung gekoppelt, deren Betätigung ein Einlagern der Stückgüter initiiert, wobei bei dieser Einlagerung die Stückgüter mittels einer Einlagerungseinrichtung von dem Auflagebereich in den Entnahmebereich bewegt werden. Die Auslöseeinrichtung kann beispielsweise als ein Fußpedal oder ein einfacher Druckknopf ausgebildet sein, deren Betätigung die Einlagerung initiiert. Bei einer bevorzugten Ausführungsform ist es jedoch vorgesehen, dass die Auslöseeinrichtung als ein einem Auflagebereich einer Einlagerungseinrichtung zugeordneter Auflageerfassungssensor ausgebildet ist, welcher erfasst, wenn ein Stückgut oder ein Abschnitt eines Stückgutes in dem Erfassungsbereich abgelegt ist. Bei dieser bevorzugten Ausführungsform muss nach dem Ablegen des letzten Stückgutes also keine zusätzliche weitere Handlung vollzogen werden, um die Einlagerung der abgelegten Stückgüter zu initiieren. Das Ablegen des letzten Stückgutes in dem Erfassungsbereich initiiert die Einlagerung, so dass das Einlagern selbst rascher durchgeführt werden kann.

Umfasst die Kommissioniervorrichtung ein Auflagebereich-Sensorsystem ist es bei einer bevorzugten Ausführungsform vorgesehen, dass die Auslöseeinrichtung durch das Auflagebereich-Sensorsystem bereitgestellt ist, d. h. dass auch die Funktionalität der Auslöseeinrichtung durch das Auflagebereich-Sensorsystem geleistet wird, die Anzahl der Bauteile also vermindert und die Kosten für die Vorrichtung gesenkt werden können.

Das Sensorsystem zum Erfassen des Bewegens von Stückgütern über den stirnseitigen Rand des Auflagetisches kann an einem beliebigen Bauteil im Bereich des Entnahmebereiches angeordnet sein, solange sichergestellt ist, dass mit dem Sensorsystem das Bewegen eines Stückgutes über den stirnseitigen Rand erfasst werden kann. Bei einer bevorzugten Ausführungsform ist es jedoch vorgesehen, dass das Sensorsystem bei dem stirnseitigen Rand des Auflagetisches selbst angeordnet ist. Damit ist gewährleistet, dass das Sensorsystem stets im Hinblick auf die einzulagernden Stückgüter ideal positioniert ist, und so sichergestellt werden kann, dass dieses, unabhängig von der Beschaffenheit der Stückgüter, das Bewegen dieser über den stirnseitigen Rand erfassen kann.

Im Nachfolgenden wird die erfindungsgemäße Vorrichtung unter Bezugnahme auf die beigefügte Zeichnung näher beschrieben, wobei:
Figur 1 eine perspektivische Ansicht einer ersten Ausführungsform der erfindungsgemäßen Kommissioniervorrichtung zeigt;
Figur 2 eine Detailansicht des Frontbereiches der ersten Ausführungsform zeigt;
Figur 3 eine Draufsicht auf die erste Ausführungsform zeigt;
Figur 4 eine Detailansicht des Bediengerätes zeigt;
Figuren 5a - 5e verschiedene Stadien der Einlagerung gemäß dem Verfahren aus der Stammanmeldung EP 3 141 497 zeigen;
Figur 6 ein beispielhaftes Sensorsystem zeigt, und
Figuren 7a und 7b schematisch die Signale des Sensors beim Bewegen von Stückgütern über den Sensor zeigen.

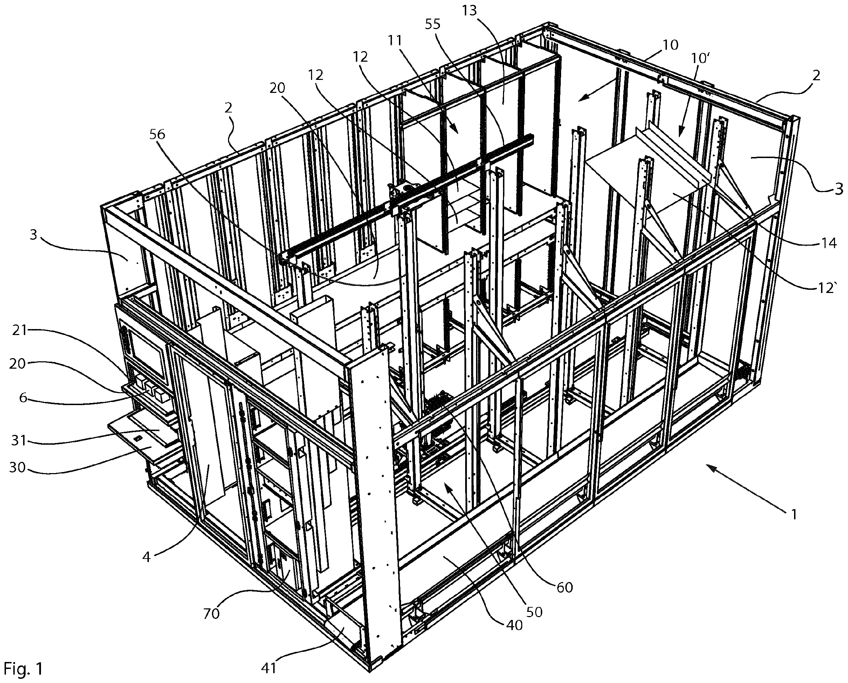

Figur 1 zeigt eine perspektivische Darstellung einer ersten Ausführungsform der erfindungsgemäßen Kommissioniervorrichtung 1. Die Kommissioniervorrichtung 1 umfasst eine Gerüststruktur 2, an welcher eine Mehrzahl von Verkleidungselementen 3 angebracht ist. Der Übersicht halber sind eine Vielzahl der Verkleidungselemente sowie einige Elemente der Gerüststruktur 2 fortgelassen. Die Kommissioniervorrichtung 1 umfasst eine erste Regalreihe 10 mit mehreren Regalen, die jeweils eine Mehrzahl von übereinander angeordneten, sich in einer horizontalen Ebene erstreckende Regalböden 12 aufweisen (wobei in Figur 1 lediglich drei Regalböden 12 dargestellt sind; weitere Regalböden sind über, unter und neben den dargestellten angeordnet). Die einzelnen Regale 11 der ersten Regalreihe 10 sind durch Regalwände 13 und eine Mehrzahl der vorgenannten Regalböden 12 gebildet. Bei der gezeigten Ausführungsform sind alle Stirnkanten (Ladekanten) der Regalböden in einer vertikalen Ebene angeordnet, was das Ein- und Auslagern von Stückgütern bzw. Arzneimittelpackungen in und von den Regalböden vereinfacht. Die gezeigten Regalböden sind für eine chaotische Lagerung von Arzneimittelpackungen ausgebildet.

Bei der gezeigten Ausführungsform der erfindungsgemäßen Kommissioniervorrichtung ist gegenüber der ersten Regalreihe 10 eine zweite Regalreihe 10' vorgesehen, die aber aus Gründen der Übersichtlichkeit nur angedeutet ist; lediglich einzelne Elemente des Stützgerüstes für diese Regalreihe und ein Regalboden 12' mit einem Lagerschacht 14 für die sortenreine Lagerung sind dargestellt.

Bei der gezeigten Ausführungsform umfasst die Kommissioniervorrichtung zwei Einlagerungseinrichtungen 20, 30, die übereinander angeordnet und in die erste Regalreihe 10 integriert sind, so dass über und unter den beiden Einlagerungseinrichtungen 20, 30 Regalböden 12 vorgesehen sind. Die Einlagerungseinrichtungen 20, 30 ragen bei der Front der Kommissioniervorrichtung aus dieser heraus und umfassen bei dem herausragenden Teil einen Auflagebereich 21, 31, auf welchem Arzneimittelpackungen zur Einlagerung abgelegt werden können. Bei Figur 1 sind in dem Auflagebereich 21 der oberen Einlagerungseinrichtung 20 drei identische Arzneimittelpackungen 6 angeordnet.

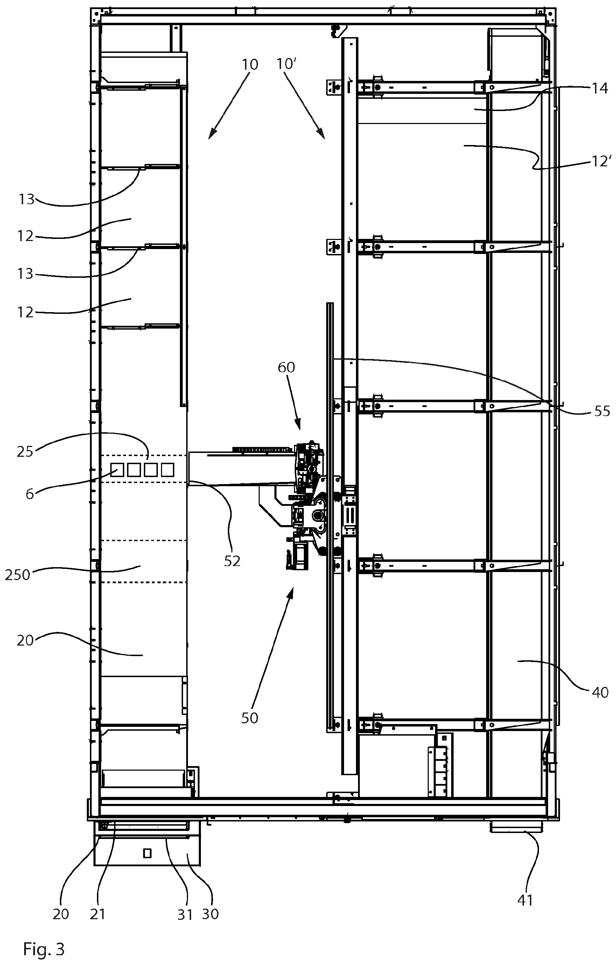

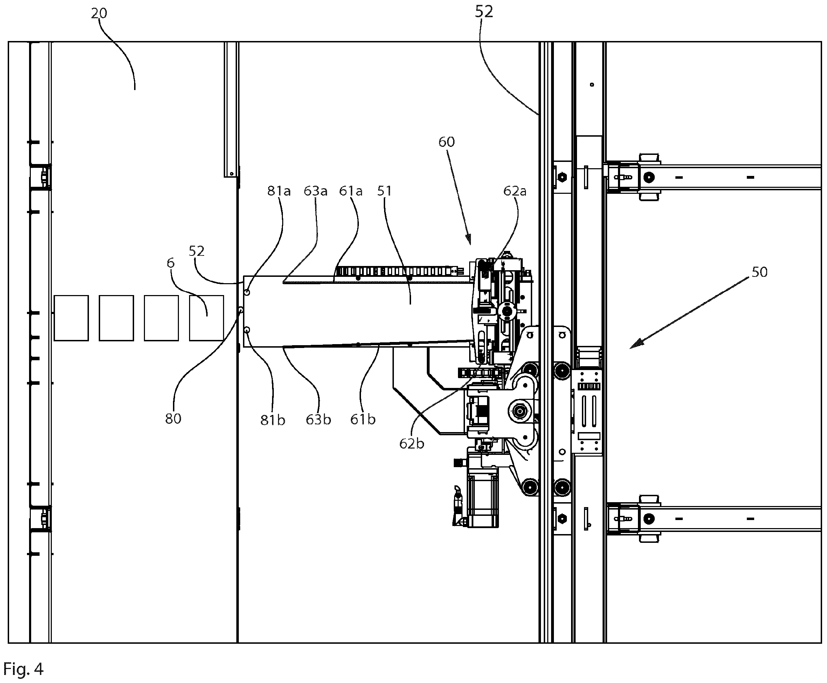

Zwischen der dargestellten ersten Regalreihe und der lediglich angedeuteten zweiten Regalreihe ist ein horizontal und vertikal an einer Führung verfahrbares Bediengerät 50 vorgesehen, welches unter Bezugnahme auf die Figuren 3 und 4 näher beschrieben wird. Dieses Bediengerät ist entlang einer lediglich angedeuteten Horizontalführung 55 und einer Vertikalführung 56 in einer Gasse zwischen den beiden Regalreihen verfahrbar.

In der Kommissioniervorrichtung ist ferner eine Auslagerungseinrichtung 40 angeordnet, die bei der gezeigten Ausführungsform als Bandförderer ausgebildet ist und zwischen der zweiten Regalreihe und der rechten Außenwand der Kommissioniervorrichtung angedeutet ist. Über die Auslagerungseinrichtung werden Arzneimittelpackungen, die auf die Auslagerungseinrichtung bewegt werden, zu einem Entnahmebereich 41 der Auslagerungseinrichtung bewegt. Die Arzneimittelpackungen können auf die Auslagerungseinrichtung gelangen, indem diese beispielsweise mit dem Bediengerät 50, gegebenenfalls unter Zwischenschaltung eines nicht dargestellten Hilfsauslagerungspfades, auf die Auslagerungseinrichtung bewegt werden. Bei den geneigten Lagerschächten können die Arzneimittelpackungen einfach durch Auslösen einer bei einem Ende eines Lagerschachtes angeordneten Auslöseeinrichtung auf die Auslagerungseinrichtung bewegt werden. In einem solchen Fall fallen die Arzneimittelpackungen einfach schwerkraftbedingt auf die Auslagerungseinrichtung.

Bei Figur 1 ist schließlich im Frontbereich der Kommissioniervorrichtung eine Steuereinrichtung 70 angeordnet, die mit dem Bediengerät, den Sensoren und Sensorsystemen, und üblicherweise den Einlagerungseinrichtungen und der Auslagerungseinrichtung gekoppelt ist. In der Mitte des Frontbereiches der Kommissioniervorrichtung ist eine Türöffnung 4 vorgesehen, durch welche die Vorrichtung zu Wartungszwecken und in Störfällen betreten werden kann.

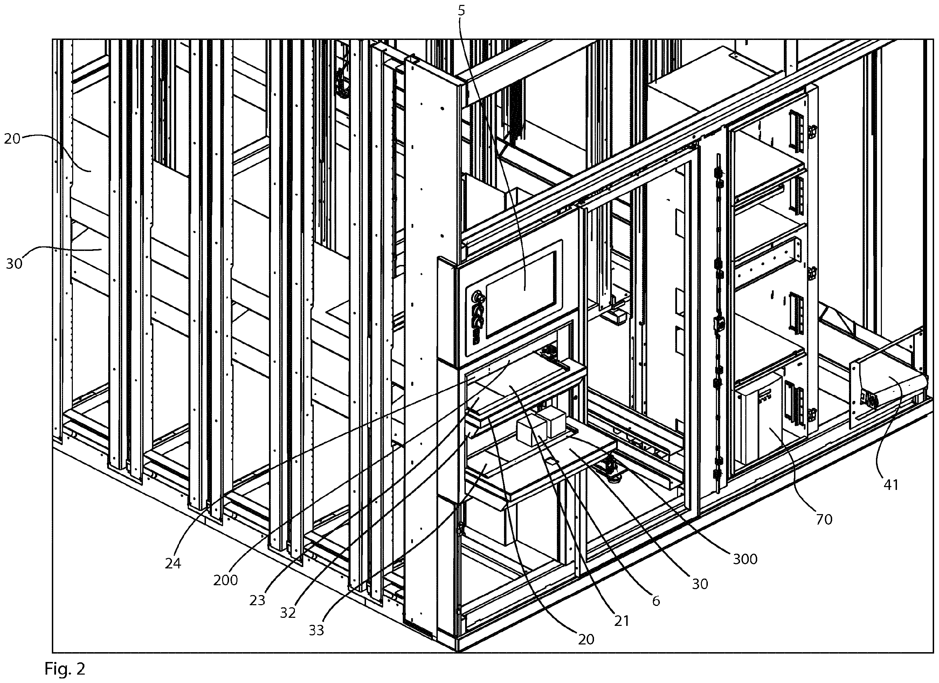

Figur 2 zeigt eine Detailansicht des Frontbereiches der ersten Ausführungsform der Kommissioniervorrichtung, wobei bei dieser Ansicht insbesondere der Auflagebereich der Einlagerungseinrichtung 20, 30 zu erkennen ist. Bei Figur 2 sind in dem Auflagebereich 31 der unteren Einlagerungseinrichtung 30 zwei identische Arzneimittelpackungen 6 angeordnet.

Jeweils über dem Auflagebereich einer Einlagerungseinrichtung ist ein Auflagebereich-Sensorsystem 200, 300 angeordnet. Beispielsweise kann es sich bei dem Sensorsystem um eine Lichtgitterkombination oder eine Kamera / eine Kamerakombination handeln, mit der Stückgutdaten ermittelt werden können, d. h. Daten über die Lage von Stückgütern auf dem jeweiligen Auflagebereich. In Abhängigkeit von der genauen Ausgestaltung des Auflagebereich-Sensorsystems kann mit diesem auch die Anordnung einer Arzneimittelpackung 6 in einem Erfassungsbereich 23 erfasst werden, ggf. unter genauer Bestimmung des Ortes der Anordnung (bezogen auf die Breite der Einlagerungseinrichtung 20). Detaillierter wird bei einer späteren Figur auf ein beispielhaftes Sensorsystem eingegangen.

Bei dem Auflagebereich-Sensorsystem 200 ist im "linken" Bereich ein alternativer Auflageerfassungssensor 24 angedeutet, mit welchem die oben genannten Funktionen ausgeführt werden können, sollte bei einer Ausführungsform kein Auflagebereich-Sensorsystem oder keines mit den oben genannten Funktionen verbaut sein.

Sobald ein Stückgut in einem Erfassungsbereich 23, 33 abgelegt wird, oder zumindest teilweise in den Erfassungsbereich hineinragt, wird der Steuereinrichtung 70 ein entsprechendes Signal übermittelt. Wie weit eine Arzneimittelpackung in einen Erfassungsbereich hineinragen muss, um ein vorgenanntes Signal auszulösen, kann bei der Steuereinrichtung oder dem Auflageerfassungssensor bzw. dem Sensorsystem selbst eingestellt werden.

Bei Figur 2 ist ferner eine Ein- und/oder Ausgabeeinrichtung 5 über der oberen Einlagerungseinrichtung 20 angedeutet, mit welcher Informationen bezüglich der einzulagernden Arzneimittelpackungen angezeigt und/oder eingegeben werden können.

Figur 3 zeigt eine Draufsicht auf die erste Ausführungsform der erfindungsgemäßen Kommissioniervorrichtung, wobei der Übersicht halber ein Großteil des Stützgerüstes 2 fortgelassen ist. Auf der linken Seite ist die Einlagerungseinrichtung 20 zu erkennen, die von einem äußeren Bereich mit dem Auflagebereich 21 bis weit in die Kommissioniervorrichtung hineinführt. In einem Entnahmebereich 25 der Einlagerungseinrichtung 20 sind vier identische Arzneimittelpackungen 6 angeordnet. Bei dieser Darstellung ist auch zu erkennen, dass die Einlagerungseinrichtung in die erste Regalreihe 10 integriert ist, da im "oberen" Bereich Regalböden 12 und Regalwände 13 über der Einlagerungseinrichtung 20 angedeutet sind. Auf der rechten Seite ist die Auslagerungseinrichtung 40 mit dem Entnahmebereich 41 zu erkennen, und zum Inneren der Kommissioniervorrichtung hin schließt sich die zweite, lediglich angedeutete Regalreihe 10' an. Zwischen der ersten Regalreihe 10 und der zweiten Regalreihe 10' ist das horizontal und vertikal verfahrbare Bediengerät 50 angeordnet, wobei die Horizontalführung 55 sich normalerweise über die gesamte Länge der Kommissioniervorrichtung erstreckt, um mit dem Bediengerät sämtliche Regalböden der Vorrichtung erreichen zu können. Das Bediengerät 50 umfasst einen Auflagetisch 51 mit einem stirnseitigen Rand 52, über welchen Arzneimittelpackungen mit einer Greifvorrichtung 60 auf den Auflagetisch 51 gezogen werden.

In Figur 3 ist ferner zwischen dem Entnahmebereich 25 und dem Auflagebereich 21 ein Einlagerungs-Sensorsystem 250 angedeutet, mit welchem die Stückgutdaten von in Einlagerungsrichtung hin zu dem Entnahmebereich bewegten Stückgütern erfasst werden. Die genaue Ausgestaltung des Sensorsystems hängt von den jeweiligen genauen Anforderungen und baulichen Gegebenheiten ab. So ist auch hier die Verwendung eines Kamerasystems oder einer Lichtgitterkombination denkbar, wobei das Sensorsystem jedoch nicht auf die beiden vorgenannten Ausführungen beschränkt ist, sondern alle Sensorsysteme Anwendung finden können, die in der Lage sind, die notwendigen Stückgutdaten, also die genaue Anordnung der Stückgüter, zu ermitteln.

Figur 4 zeigt eine Detailaufnahme des Bediengerätes. Die Greifvorrichtung 60 des Bediengerätes 50 umfasst bei der gezeigten Ausführungsform zwei Klemmbacken 61a, 61b, die bei zwei Schwenkgelenken 62a, 62b derart verschwenkbar sind, dass die Spitzen 63a, 63b der Klemmbacken 61a, 61b aufeinander zu und voneinander weg bewegt werden können, ohne dass die Basis der Klemmbacken 61a, 61b wesentlich bewegt wird. Die gesamte Greifvorrichtung 60 kann über dem Auflagetisch 51 hinein in den Entnahmebereich 25 der Einlagerungseinrichtung 20 bewegt werden, die Arzneimittelpackungen 6 in dem Entnahmebereich greifen und über den stirnseitigen Rand 52 des Auflagetisches 51 über einen bei dem Entnahmebereich angeordneten Sensor 80 und/oder über zwei Sensoren 81a, 81b bei dem stirnseitigen Rand 52 des Auflagetisches auf diesen ziehen, wobei die Sensoren bei dem Bewegen der Arzneimittelpackungen über diese ein Signal erzeugen und dieses an die Steuereinrichtung weitergeben. Bei der gezeigten Ausführungsform ist ein Sensor 80 bei dem Entnahmebereich 25, d. h. bei der Einlagerungseinrichtung 20, und zwei Sensoren 81a, 81b bei dem stirnseitigen Rand des Auflagetisches angeordnet. Diese Anordnung stellt lediglich eine mögliche Anordnung von Sensoren dar. Es ist auch möglich, lediglich einen Sensor bei dem Entnahmebereich oder dem stirnseitigen Rand des Auflagetisches zu verwenden. Die genaue Anzahl und Konfiguration der Sensoren ist nicht ausschlaggebend, wesentlich ist, dass das Bewegen der Arzneimittelpackungen aus dem Entnahmebereich auf den Auflagetisch mittels eines Sensors exakt erfasst werden kann.

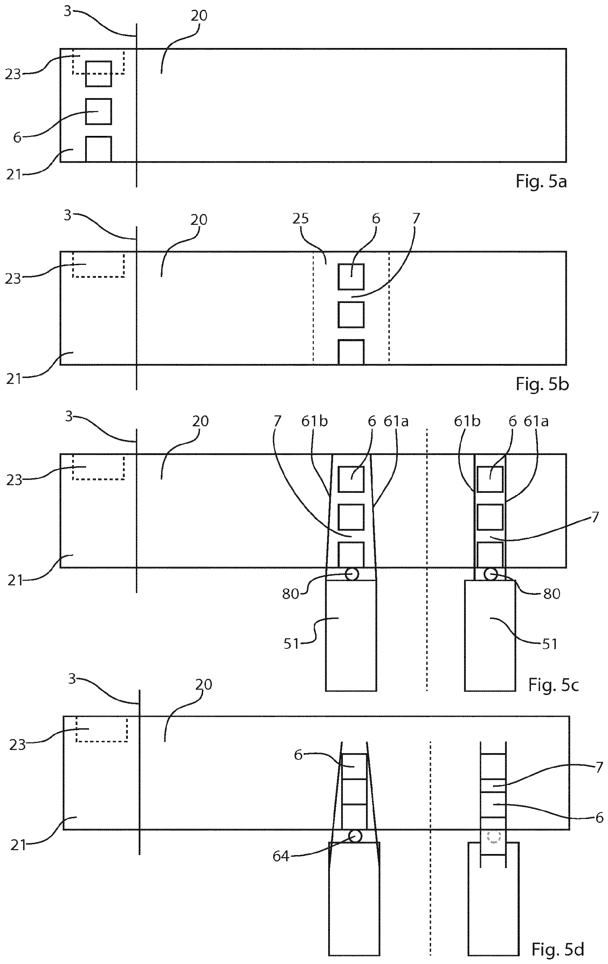

Die Figuren 5a - e zeigen verschiedene Stadien bei der Einlagerung einer Mehrzahl von identischen Stückgütern bzw. Arzneimittelpackungen. Zur Vereinfachung sind bei den vorgenannten Figuren lediglich die für die einzelnen Verfahrensschritte wichtigen Bauteile schematisch dargestellt.

Figur 5a zeigt eine Einlagerungseinrichtung 20 mit einem Auflagebereich 21 und einem Erfassungsbereich 23 eines (nicht dargestellten) Auflageerfassungssensors. In dem Auflagebereich 21 sind drei identische Stückgüter bzw. Arzneimittelpackungen 6 beabstandet voneinander angeordnet, wobei die "obere" Arzneimittelpackung in den Erfassungsbereich 23 hineinragt.

Das Hineinragen der oberen Arzneimittelpackung in den Erfassungsbereich 23 wird von dem (nicht dargestellten) dem Erfassungsbereich 23 zugeordneten Auflageerfassungssensor erfasst und der Steuereinrichtung übermittelt. Daraufhin werden die Stückgüter bzw. Arzneimittelpackungen 6 mit der Einlagerungseinrichtung 20 in einen Entnahmebereich 25 bewegt, wie dies in Figur 5b zu erkennen ist.

Der Entnahmebereich ist ein Abschnitt innerhalb der Kommissioniervorrichtung, auf welchen die Greifvorrichtung zum Bewegen der Arzneimittelpackungen von einer Einlagerungseinrichtung auf den Auflagetisch des Bediengeräts zugreift, indem die Greifvorrichtung in diesen Entnahmebereich bewegt wird. Der Entnahmebereich ist kein "ortsfester" Bereich innerhalb der Kommissioniervorrichtung, sondern kann in Abhängigkeit von der Position beispielsweise des Bediengeräts oder des Ablageorts der einzulagernden Stückgüter variieren.

Wie bereits angedeutet, kann die Greifvorrichtung zwei Klemm- oder Greifbacken aufweisen, die beispielsweise verschwenkt werden können. Alternativ ist es auch denkbar, dass die beiden Klemmbacken parallel zueinander verschiebbar angeordnet sind, und durch eine Verschiebung einer oder zweier Klemmbacken die Arzneimittelpackungen eingeklemmt bzw. ergriffen werden.

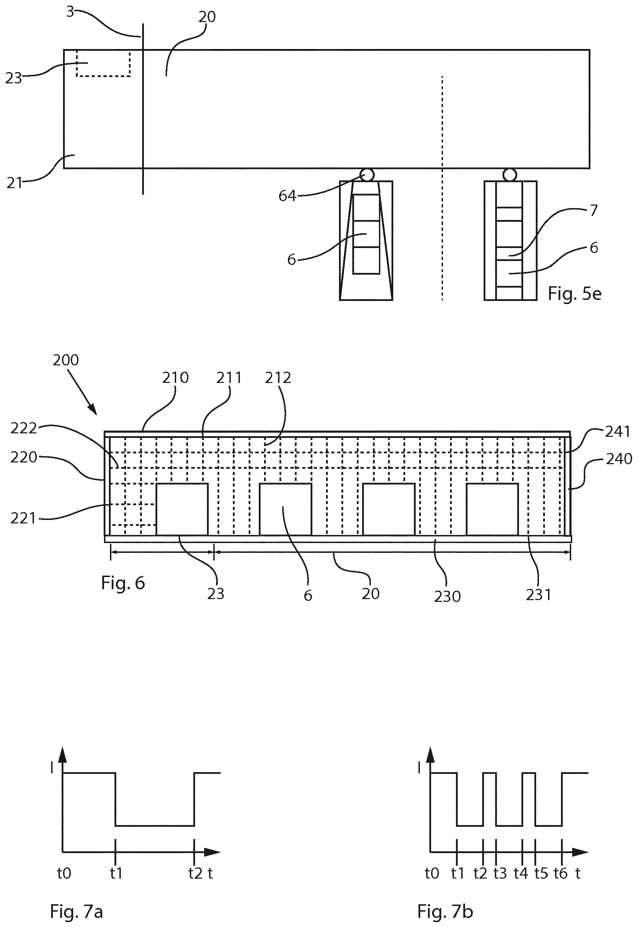

Bei Figur 5c sind die beiden vorgenannten Varianten, nämlich die verschwenkbaren Klemmbacken und die parallel verfahrbaren Klemmbacken, in einer Figur angedeutet, wobei bei beiden Darstellungen die Klemmbacken 61a, 61b noch nicht vollständig zugefahren sind, d. h. die Arzneimittelpackung(-en) noch nicht gegriffen ist (sind). Unabhängig von der Art der verwendeten Klemmbacken ist zwischen den Arzneimittelpackungen 6 (wie bei diesem Beispiel angeordnet) ein Freiraum 7 vorhanden. Die Arzneimittelpackungen können jedoch auch ohne Freiraum zwischen ihnen als Verbund mehrerer Arzneimittelpackungen auf dem Auflagebereich 21 angeordnet werden. Bei der gezeigten Ausführungsform ist dem Entnahmebereich 25 ein Sensor 80 zugeordnet, der ein Bewegen der Stückgüter auf den Auflagetisch 51 erfassen kann. Bei der Bewegung der Arzneimittelpackungen über den Sensor erzeugt dieser ein Signal bzw. eine Signaländerung, welche/-s an die Steuereinrichtung weitergegeben wird, und auf Basis dieses Signals bzw. der diesem Signal entsprechenden Lageinformationen der Arzneimittelpackungen kann die Steuereinrichtung unter Verwendung weiterer Daten die Anzahl der bewegten Arzneimittelpackungen bestimmen (siehe dazu Figuren 6a, 6b).

Ausgehend von der Darstellung in Figur 5c werden die Klemmbacken 61a, 61b der Greifvorrichtung so weit zugefahren, dass bei der linken Darstellung die obere Arzneimittelpackung und bei der rechten Darstellung sämtliche Arzneimittelpackungen eingeklemmt bzw. ergriffen sind. Werden nun, wie dies bei Figur 5d angedeutet ist, die Packungen in Richtung auf den Auflagetisch 51 bewegt, so wird bei den verschwenkbaren Klemmbacken (linker Abschnitt der Figur 5d) zunächst lediglich die "obere" Arzneimittelpackung bewegt, und zwar derart, dass der Freiraum 7 zwischen der oberen und der mittleren Arzneimittelpackung geschlossen wird. Der Verbund der beiden Arzneimittelpackungen wird dann bei weiterer Bewegung der Klemmbacken hin zu dem Auflagetisch 51 zu der "unteren" Arzneimittelpackung bewegt, und es entsteht ein Verbund aus drei abstandsfrei aneinander liegenden Arzneimittelpackungen.

Anders verhält es sich bei den Arzneimittelpackungen, die von der Greifvorrichtung mit den parallel verschiebbaren Klemmbacken ergriffen wurden, wie dies in Figur 5d rechts angedeutet ist. Aufgrund der Parallelverschiebung einer oder beider Klemmbacken 61a, 61b werden sämtliche Arzneimittelpackungen, die aufgrund der Identität der Arzneimittelpackungen die gleichen Dimensionen haben, zeitgleich ergriffen, so dass bei dem Bewegen der Klemmbacken hin zu dem Auflagetisch 51 keine Verschiebung der Arzneimittelpackungen aufeinander zu stattfindet, das heißt die Freiräume 7 zwischen den Arzneimittelpackungen erhalten bleiben.

Bei Figur 5e ist das "Resultat" der Greifbewegung zu erkennen. Bei der linken Darstellung mit den verschwenkbaren Klemmbacken 61a, 61b sind die drei Arzneimittelpackungen als ein abstandsfreier Verbund auf den Auflagetisch 51 bewegt. Bei der rechten Darstellung mit den parallel verschiebbaren Klemmbacken sind die Arzneimittelpackungen entsprechend ihrer ursprünglichen Ablage auf den Auflagetisch 51 bewegt, das heißt zwischen den Arzneimittelpackungen ist noch immer ein Freiraum 7 vorhanden.

Die Figur 6 zeigt beispielhaft ein Sensorsystem 200, welches als Auflagebereich-Sensorsystem 200, 300 oder Einlagerungs-Sensorsystem 250, 260 verwendet werden kann. Bei dem Sensorsystem handelt es sich um ein Lichtgitter, bzw. um eine Kombination von zwei Lichtgittern 210, 230 und 220, 240, umfassend ein horizontales Lichtgitter 210, 230 mit einer Mehrzahl von Lichtquellen 211 und Empfängern 231 und ein vertikales Lichtgitter 220, 240 mit ebenfalls einer Mehrzahl von Lichtquellen 221 und Empfängern 241. Ausgehend von den Lichtquellen 211, 221 werden Lichtstrahlen 212, 222 ausgestrahlt und bei den Empfängern 231, 241 empfangen. Basierend darauf, welche Lichtstrahlen einen Empfänger erreichen, werden die Stückgutdaten ermittelt.

Bei der gezeigten Ausführungsform scheinen die Lichtgitter auf gleicher Höhe bezogen auf die Bewegungsrichtung der Stückgüter angeordnet zu sein, dies ist aber praktisch nicht der Fall. Die Lichtgitter sind zumindest so weit voneinander entfernt, dass sich die Lichtstrahlen der Gitter nicht stören.

Alternativ kann ein Sensorsystem durch ein Kamerasystem realisiert werden, wobei die von dem Kamerasystem erfassten Daten (Bilder) einer Bildverarbeitung unterworfen werden, die die erforderlichen Stückgutdaten liefert.

Die Figuren 7a und 7b veranschaulichen das von dem Sensor 80 gelieferte Signal in Abhängigkeit von der Bewegung der Arzneimittelpackungen auf den Auflagetisch 51, wobei (bei dieser Ausführungsform) die X-Achse die Zeitachse und die Y-Achse die Signalintensität zeigt. Bei dieser Ausführungsform wird davon ausgegangen, dass der Sensor einfach die auf ihn auftreffende Lichtintensität misst. Bei anderen Ausführungsformen können andere Sensoren, beispielsweise Berührungssensoren, verwendet werden.

Die Figur 7a veranschaulicht die Bewegung des Verbundes aus drei Arzneimittelpackungen über den Sensor 80. Wie zu erkennen ist, nimmt die Intensität des von dem Sensor erfassten Lichtes zu einem Zeitpunkt t1 ab und steigt zu einem Zeitpunkt t2 wieder an. Auf der Basis der Zeitdauer Δt12 (t2-t1), der Anzahl der Signalveränderungen (Lageinformationen der Arzneimittelpackungen), der Bewegungsgeschwindigkeit der Klemmbacken sowie der Identifizierungsinformationen zu den Arzneimittelpackungen kann die Steuereinrichtung die Anzahl der bewegten Arzneimittelpackungen automatisch bestimmen.

Bei Figur 7a wurde eine Intensitätsänderung lediglich für ein Zeitintervall t1/t2 ermittelt, und anhand der weiteren Informationen kann bestimmt werden, dass drei Arzneimittelpackungen auf den Auflagetisch bewegt wurden. Anders verhält es sich, wenn die Arzneimittelpackungen nicht zu einem Verbund zusammengeschoben bzw. -gezogen werden, sondern mit Freiräumen 7 zwischen den Arzneimittelpackungen über den Sensor bewegt werden. Dies ist in Figur 7b veranschaulicht, wo zu drei Zeitpunkten t1, t3, t5 eine Verminderung der Lichtintensität und zu drei Zeitpunkten t2, t4, t6 eine Zunahme der Lichtintensität erfasst wird, wobei der Zeitraum der verminderten Lichtintensität einer Bewegung einer Arzneimittelpackung über einen Sensor entspricht. Auf der Basis dieser Informationen Δt12 (t2-t1), Δt34 (t4-t3) und Δt56 (t6-t5), der Bewegungsgeschwindigkeit der Klemmbacken sowie der Identifizierungsinformationen zu den Arzneimittelpackungen kann eindeutig die Anzahl der Arzneimittelpackungen bestimmt werden.

## Patentansprüche

1. Kommissioniervorrichtung (1) für Stückgüter, aufweisend zumindest eine Regalreihe (10) mit mindestens einem Regal (11) mit einer Mehrzahl von übereinander angeordneten Regalböden (12),
zumindest eine Einlagerungseinrichtung (20, 30) mit einem Auflagebereich (21, 31) zur Aufnahme von einzulagernden Stückgütern,
ein mit einer Steuereinrichtung (70) gekoppeltes Bediengerät (50) mit
einem Auflagetisch (51) zur Aufnahme eines oder mehrerer Stückgüter, wobei der Auflagetisch (51) einen stirnseitigen Rand (52) aufweist, und
zumindest einer Greifvorrichtung (60), mit welcher Stückgüter in einem Entnahmebereich (25, 35) einer Einlagerungseinrichtung (20, 30) ergriffen und von der Einlagerungseinrichtung (20, 30) über den stirnseitigen Rand (52) auf den Auflagetisch (51) bewegt werden können,
eine mit der Steuereinrichtung (70) gekoppelte Auslöseeinrichtung (22, 32) zum Initiieren einer Einlagerung von Stückgütern nach dem Ablegen eines letzten Stückgutes, und
zumindest ein mit der Steuereinrichtung (70) gekoppeltes Sensorsystem (80, 81, 81b, 200, 300, 250, 260), mit welchem Stückgutdaten erfassbar und an die Steuereinrichtung (70) übermittelbar sind,
**dadurch gekennzeichnet, dass** die Steuereinrichtung (70) derart ausgebildet ist, dass die Anzahl der in dem Auflagebereich (21, 31) angeordneten identischen Stückgüter auf der Basis der Stückgutdaten und auf der Basis von der Steuereinrichtung bekannten Größendaten der Stückgüter ermittelbar ist.

2. Kommissioniervorrichtung (1) für Stückgüter nach Anspruch 1, **dadurch gekennzeichnet, dass** ein Sensorsystem als ein Auflagebereich-Sensorsystem (200, 300) ausgebildet ist, mit welchem Stückgüterdaten der im Auflagebereich angeordneten Stückgüter erfassbar sind.

3. Kommissioniervorrichtung (1) für Stückgüter nach Anspruch 1 oder 2, **dadurch gekennzeichnet, dass** ein Sensorsystem als Einlagerungs-Sensorsystem (250, 260) ausgebildet ist, mit welchem Stückgutdaten
bei dem Bewegen der Stückgüter entlang der Einlagerungsrichtung oder
nach dem Bewegen der Stückgüter in den Entnahmebereich (25, 35) erfassbar sind.

4. Kommissioniervorrichtung (1) für Stückgüter nach einem der Ansprüche 1 - 3, **dadurch gekennzeichnet, dass** ein Sensorsystem als ein einem Entnahmebereich (25, 35) zugeordnetes Entnahmebereich-Sensorsystem (80, 81a, 81b) ausgebildet ist, mit welchem Stückgutdaten bei dem Bewegen der Stückgüter auf den Auflagetisch (51) ermittelbar sind.

5. Kommissioniervorrichtung (1) für Stückgüter nach Anspruch 4, **dadurch gekennzeichnet, dass** das Entnahmebereich-Sensorsystem (80, 81a, 81b) bei dem stirnseitigen Rand (52) des Auflagetisches (51) angeordnet ist.

6. Kommissioniervorrichtung (1) für Stückgüter nach einem der Ansprüche 1 - 5, **dadurch gekennzeichnet, dass** die Auslöseeinrichtung als ein einem Auflagebereich (21, 31) einer Einlagerungseinrichtung (20, 30) zugeordneter Auflageerfassungssensor (22, 32) ausgebildet ist, welcher erfasst, wenn ein Stückgut oder ein Abschnitt eines Stückgutes in einem Erfassungsbereich (23, 33) des Auflagebereiches (21, 31) angeordnet ist.

7. Kommissioniervorrichtung (1) für Stückgüter nach einem der Ansprüche 3 - 6, **dadurch gekennzeichnet, dass** die Auslöseeinrichtung durch das Auflagebereich-Sensorsystem (200, 300) bereitgestellt ist.

## Claims

1. Picking device (1) for piece goods, comprising
at least one rack row (10) having at least one rack (11) with a plurality of shelves (12) situated one above the other,
at least one storage device (20, 30) having a support area (21, 31) for receiving piece goods to be stored,
an operator unit (50), which is coupled to a control unit (70), having
a support table (51) for receiving one or more piece goods, the support table (51) having an end-face edge (52), and
at least one gripping apparatus (60) by means of which piece goods may be grasped in a removal area (25, 35) of a storage device (20, 30) and moved from the storage device (20, 30), over the end-face edge (52), onto the support table (51),
a release device (22, 32) that is coupled to the control unit (70) for initiating storage of piece goods after a last piece good has been placed, and
at least one sensor system (80, 81, 81b, 200, 300, 250, 260), coupled to the control unit (70), with which piece goods data are detectable and transmittable to the control unit (70),
**characterized in that** the control unit (70) is designed in such a way that the number of identical piece goods situated in the support area (21, 31) is determinable based on the piece goods data and based on the size data of the piece goods known to the control unit.

2. Picking device (1) for piece goods according to Claim 1, **characterized in that** a sensor system is designed as a support area sensor system (200, 300), with which piece goods data of the piece goods situated in the support area are detectable.

3. Picking device (1) for piece goods according to Claim 1 or 2, **characterized in that** a sensor system is designed as a storage sensor system (250, 260), with which piece goods data
are detectable while the piece goods are moving along the storage direction or
after the piece goods have moved into the removal area (25, 35) .

4. Picking device (1) for piece goods according to one of Claims 1 to 3, **characterized in that** a sensor system is designed as a removal area sensor system (80, 81a, 81b) associated with a removal area (25, 35), with which piece goods data are determinable while the piece goods are moving onto the support table (51).

5. Picking device (1) for piece goods according to Claim 4, **characterized in that** the removal area sensor system (80, 81a, 81b) is situated at the end-face edge (52) of the support table (51).

6. Picking device (1) for piece goods according to one of Claims 1 to 5, **characterized in that** the release device is designed as a support detection sensor (22, 32), associated with a support area (21, 31) of a storage device (20, 30), which detects when a piece good or a portion of a piece good is situated in a detection range (23, 33) of the support area (21, 31).

7. Picking device (1) for piece goods according to one of Claims 3 to 6, **characterized in that** the release device is provided by the support area sensor system (200, 300).

## Revendications

1. Dispositif de préparation de commandes (1) pour des produits de détail, comprenant
au moins une rangée d'étagères (10) comprenant au moins une étagère (11) avec une pluralité d'étagères (12) disposées les unes au-dessus des autres,
au moins un dispositif de stockage (20, 30) avec une zone de dépose (21, 31) pour recevoir des produits de détail à stocker,
un appareil opérateur (50) couplé à un dispositif de commande (70) avec
une table de dépose (51) destinée à recevoir un ou plusieurs produits de détail, la table de dépose (51) présentant un bord frontal (52), et
au moins un dispositif de préhension (60), avec lequel des produits de détail peuvent être saisis dans une zone de prélèvement (25, 35) d'un dispositif de stockage (20, 30) et déplacés du dispositif de stockage (20, 30) sur le bord frontal (52) sur la table de dépose (51),
un dispositif de déclenchement (22, 32) couplé au dispositif de commande (70) pour déclencher une mise en stock des produits de détail après la dépose d'une dernière produits de détail, et
au moins un système de capteurs (80, 81, 81b, 200, 300, 250, 260) couplé au dispositif de commande (70), avec lequel des données de produits de détail peuvent être saisies et transmises au dispositif de commande (70),
**caractérisé en ce que** le dispositif de commande (70) est conçu de telle sorte que le nombre d'produits de détail identiques disposés dans la zone de dépose (21, 31) étant déterminé sur la base des données de produits de détail et sur la base des données dimensionnelles des produits de détail connues par le dispositif de commande.

2. Dispositif de préparation de commandes (1) pour des produits de détail selon la revendication 1, **caractérisé en ce qu'**un système de capteurs est conçu comme un système de capteurs de zone de dépose (200, 300), avec lequel des données de produits de détail des produits de détail disposées dans la zone de support peuvent être détectées.

3. Dispositif de préparation de commandes (1) pour des produits de détail selon la revendication 1 ou 2, **caractérisé en ce qu'**un système de capteurs est conçu comme un système de capteurs de stockage (250, 260), avec lequel des données des produits de détail peuvent être détectées
lors du déplacement des produits de détail le long de la direction de stockage, ou
après le déplacement des produits de détail dans la zone de prélèvement (25, 35).

4. Dispositif de préparation de commandes (1) pour des produits de détail selon l'une des revendications 1 à 3, **caractérisé en ce qu'**un système de capteurs est conçu comme un système de capteurs de zone de prélèvement (80, 81a, 81b) affecté à une zone de prélèvement (25, 35), avec lequel des données de produits de détail peuvent être déterminées lors du déplacement des produits de détail sur la table de dépose (51) .

5. Dispositif de préparation de commandes (1) pour des produits de détail selon la revendication 4, **caractérisé en ce que** le système de capteurs de zone de prélèvement (80, 81a, 81b) est disposé près du bord frontal (52) de la table de dépose (51).

6. Dispositif de préparation de commandes (1) pour des produits de détail selon l'une des revendications 1 à 5, **caractérisé en ce que** le dispositif de déclenchement est réalisé sous la forme d'un capteur de détecteur de dépose (22, 32) affecté à une zone de dépose (21, 31) d'un dispositif de stockage (20, 30), qui détecte lorsqu'une produit de détail ou une section d'une produit de détail est disposée dans une zone de détection (23, 33) de la zone de dépose (21, 31).

7. Dispositif de préparation de commandes (1) pour des produits de détail selon l'une des revendications 3 à 6, **caractérisé en ce que** le dispositif de déclenchement est fourni par le système de capteurs de zone de dépose (200, 300) .
